# EUROPEAN PATENT APPLICATION

(11) **EP 1 115 015 A1**
(43) Date of publication of application: **11.07.2001**
(21) Application number: 01100037.9
(22) Date of filing: 05.01.2001
(51) Int. Cl.: G02B 6/38

(54) **Crimping tool particulary suited to end terminals of fibre-optic waveguides and associated crimping machine**

(30) Priority: 05.01.2000 FR 0000302
(71) Applicant: F.C.I. - Framatome Connectors International, 92400 Courbevoie (FR)
(72) Inventor: Fantini, Flavio, 92150 Puteaux (FR)
(74) Representative: Beetz & Partner Patentanwälte

(57) **Abstract**

The invention relates to a crimping tool particularly suited to end terminals of fibre-optic waveguides with a main block (12), a stamping block (6), a device for adjusting the crimping height (1) secured to the stamping block. The stamping block (6) can be moved vertically with respect to the main block (12) using at least one guide post which slides in the main block, the crimping members being brought at the same time to a crimping zone in which an end terminal can be held. The invention also relates to a crimping machine which comprises a crimping tool and a loading device (23) for automatically introducing terminals into the crimping tool, the loading device having a gripping device for holding the terminals and a first feed device for moving the gripping device with the terminal.

## Description

The invention relates to a crimping tool particularly suited to end terminals of fibre-optic waveguides, comprising, in particular, a main block, a stamping block, a device for adjusting the crimping height which is connected to the stamping block, and at least two crimping members and a crimping machine comprising such a tool.

Such crimping tools or crimping machines are preferably used in general to connect wires to their connectors by crimping. When copper braids are connected by crimping to crimping contacts or other connectors, the wings of the contact are, for example, rolled one onto the other so that the connection produced is, on the one hand, an electrical connection and, on the other hand, a mechanical connection. The manufacture of cables fitted with crimp-on terminals is generally highly automated. Such crimping machines are, however, suited only to converting contacts in series and offer no possibility of using the contacts individually.

Such crimping machines are entirely unsuitable for crimping the end terminals or end ferrules onto optical fibres in fibre-optic waveguides given that, on the one hand, the end terminals for fibres are in individual form and, on the other hand, there is to be only a mechanical connection between the end terminal and the waveguide without deforming the fibre-optic waveguide in the way that, for example, copper braids are deformed upon crimping.

The object of the invention is to put forward a crimping tool which is suited both to manual use and to automatic use, particularly for connecting end terminals onto fibre-optic waveguides, by crimping.

Another object of the invention consists in putting forward a crimping machine which is capable, in automatic operation, of connecting a connector in individual form to a contact via means of a crimping operation.

The invention relates in particular to a crimping tool, particularly for end terminals of fibre-optic waveguides comprising:
- a main block,
- a stamping block,
- a device for adjusting the crimping height which is connected to the stamping block, and,
- at least two crimping members,
in which tool the stamping block can be moved vertically with respect to the main block using at least one guide post which slides in the main block while a member body placed so that it can rotate in the main block turns when the stamping block comes down so that the crimping members placed at right angles to the axis of rotation of the member body are brought at the same time into a crimping zone in which a fibre end terminal can be held.

Advantageously, the crimping tool comprises a cam disc fixed on the side of the stamping block, this disc acting on a crank connected to the member body.

One of the ends of the crank of the crimping tool may have a first bore to accommodate a needle which can slide in a guide well arranged in the cam disc and the other end of the crank may be fixed to the member body in such a way that the member body turns at the same time as the crank.

In a preferred embodiment, the beginning of the guide well may be essentially vertical and the end of the guide well may be inclined towards the vertical in such a way that the crank is turned when the stamping block moves vertically.

The L-shaped main block may comprise a baseplate essentially of rectangular shape with bores for attaching it to a press or to an adapter plate and may comprise a stand vertical and perpendicular to the baseplate and in which and parallel to the latter is made at least one guide bore to accommodate the guide post and where, in this other member, and in which is made a continuous accommodating opening with symmetry of revolution and perpendicular to these guide bores, for housing the member body.

The member body may be made in a single piece which essentially has symmetry of revolution, and may have a shaft with a smaller diameter in the end zone and a medium-sized diameter in the middle zone on which is placed a washer with a larger diameter which has bearing orifices parallel to the axis of rotation and offset by 90° on the circumference to accommodate pegs and comprises, along the axis of rotation, a passage opening to accommodate a support for a terminal for manual operation.

In one particular embodiment, the rectangular crimping members, each having a V-shaped pointed end, are housed in an essentially disc-shaped member support fixed to the main block.

In an advantageous embodiment, the surfaces of the crimping members facing towards the body of the main block have slots running obliquely with respect to the horizontal direction and the member support has four guide slots offset by 90° to house four crimping members so that the terminals in the slots act, when the crank turns, in such a way on the oblique surfaces of the slots that the crimping members are moved together or further apart, together.

The stand may have laterally, in the accommodating opening, a hole, the support of this member having, level with the hole a slit so that a gripping device can be introduced into the crimping zone, particularly for fibre end terminals.

The invention also relates to a crimping machine comprising:
a crimping tool as hereinabove and a loading device for automatically introducing terminals into the crimping tool, the loading device having a gripping device for holding the terminals and a first feed device for pushing the gripping device with a gripped terminal into the crimping zone of the body of the member of the crimping tool.

The gripping device may advantageously have two arms which can be inclined towards each other, it being possible for at least one arm to be oriented towards the other by a first piston such that the free ends of the arms can hold a terminal.

In one particular embodiment, the first feed device has a ram with a stroke of as much as 160 mm.

In a preferred embodiment, the machine may comprise a vertical holder for storing the terminals which are stored one upon the next separately, the store forming an essentially vertical well, the storage holder having a second piston which conveys the terminals one after another towards the free ends of the arms.

According to one particular embodiment, the arms run essentially parallel to the direction of pushing of the feed device and are aligned with the crimping zone and the hole.

As far as the crimping tool according to the present invention is concerned, it is particularly advantageous for it to be compatible with standard presses. This further gives the possibility of gradually adjusting the crimping height. Simply by introducing a contact support into a member body, the crimping tool according to the invention can quickly and easily be converted from automatic use to manual use, thus avoiding lengthy down-times.

Other particular features and advantages of the invention will become apparent from the description according to some exemplary embodiments in conjunction with the figures which depict:
- In Figure 1: an exploded view of the crimping tool according to the invention;
- In Figure 2: a rear view of the assembled crimping tool according to the invention;
- In Figure 3: a view from above of the crimping tool, this figure continues on its left from Figure 10 and shows a view from above of the crimping machine in its entirety;
- In Figure 4: a side view of the crimping tool according to Figure 2 rotated through 90° in a clockwise direction;
- In Figure 5: a section on the vertical line A-A in Figure 2;
- In Figure 6: a section on the line B-B projected from Figure 3;
- In Figure 7: a section on C-C from Figure 3;
- In Figure 8: a section on the line D-D of the crimping tool according to Figure 3 in which the stamping block and the cam disc and the device for adjusting the crimping height are in the uppermost position;
- In Figure 9: a front view of the crimping tool rotated through 90° in the clockwise direction with respect to Figure 2;
- In Figure 10: a view from above of the first and of the second feed device for automatic operation according to the invention;
- In Figure 11: a side view of the first and of the second feed device for automatic operation.

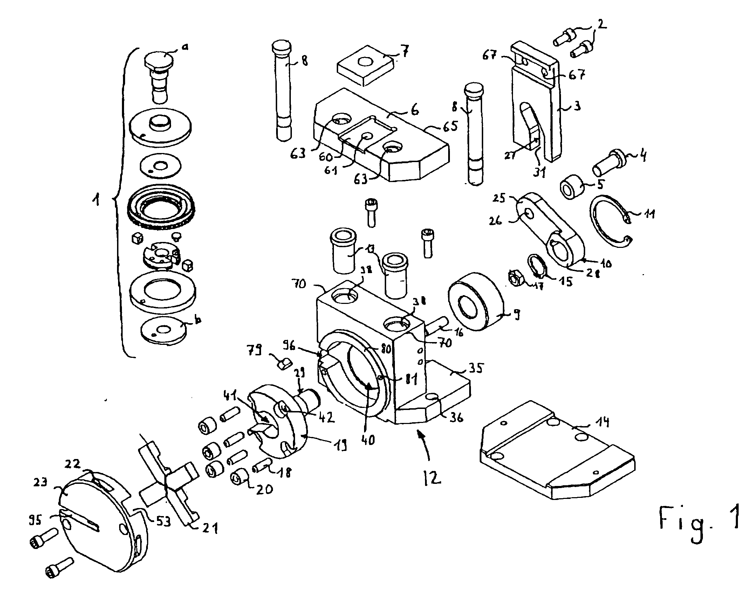

In what follows, reference will be made to Figures 1 to 9 for the precise functioning of an example of a crimping tool according to the invention.

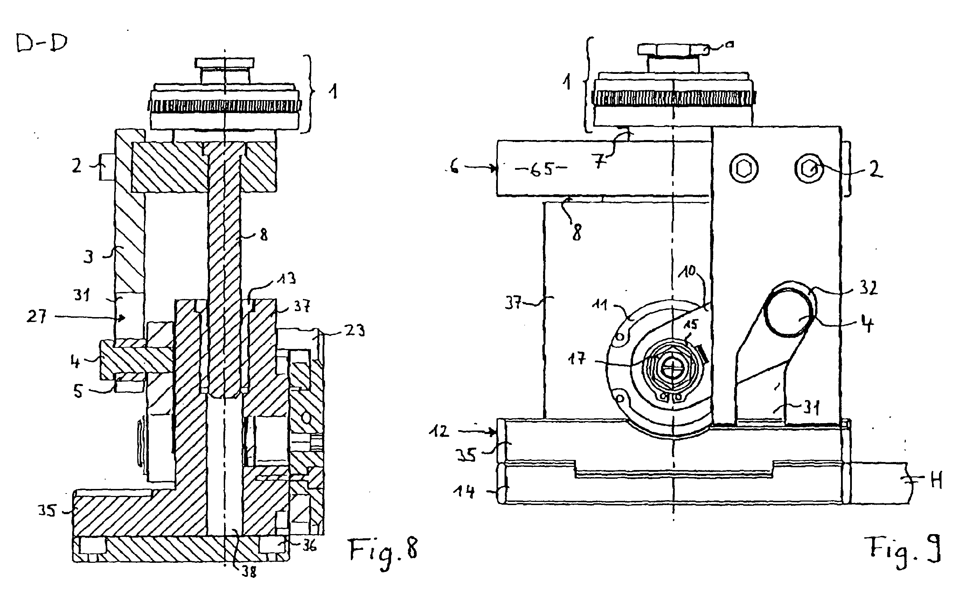

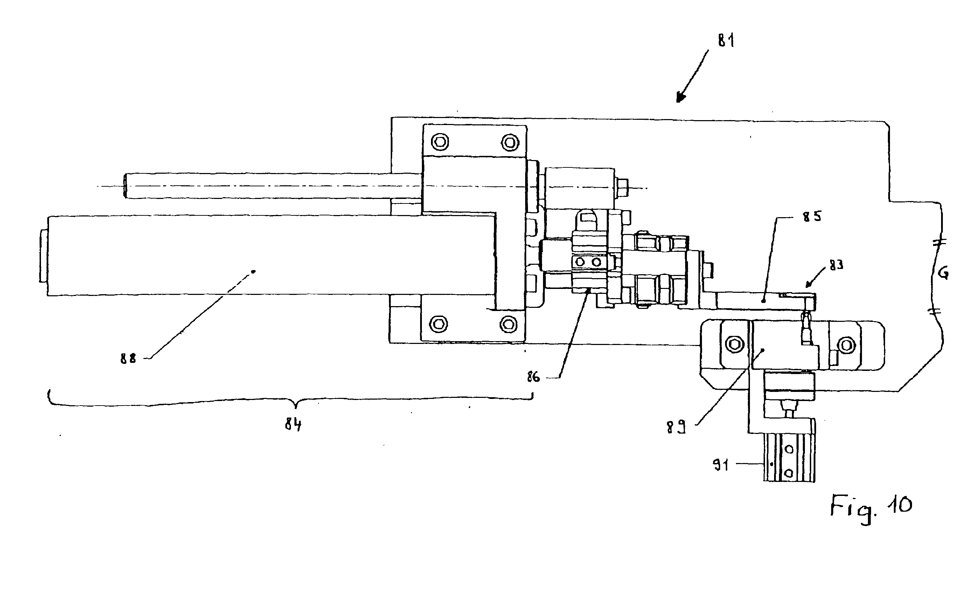

Figure 1 shows an exploded view of a crimping tool according to the invention and provides a clear depiction of all the parts of the crimping tool. In the top left-hand zone, it is possible to discern the device for adjusting the crimping height which makes it possible to gradually adjust the crimping height to within one micron. The various parts are inserted in order over the bolt a, the lower washer b resting on the square upper spacer piece 7. The latter in turn sits in a recess 60 made in the stamping block 6. The stamping block 6, of essentially rectangular shape, has, in the recess 60, a centered threaded bore 61 into which the free end of the bolt a is screwed as shown in Figure 7. The washers of the device for adjusting the crimping height 1 are arranged in such a way that they can turn about the bolt a. To the left and to the right of the square recess 60, parallel to the threaded bore 61, there are two bores 63 into which guide posts 8 are introduced in such a way that these guide posts 8 are secured to the stamping block 6 as can also be seen in Figure 7. At right angles to the bores 63 and to the threaded bore 61, two bores 66 with internal screw tread are provided on the wall 65 for attaching an essentially rectangular cam disc 3 (see Figure 9). Two passages 67 suited to the bores 66 are arranged on the upper edge of this cam disc 3. At the same height as these passages 67 there is, on the reverse side of the cam disc 3, and running horizontally, a fitting slot 68 of a width that corresponds to the stamping block 6. As can be seen in Figure 9, this rectangular cam disc 3 is fixed to the right-hand side of the stamping block 6 using two hexagon socket screws. The complete unit made up of the cam disc 3, the stamping block 6, the guide posts 8 and the device for adjusting the crimping height 1 which, as will be explained later on, can be moved vertically with respect to a main block 12 where a crimping member of a press presses on the device for adjusting the crimping height 1, which causes the vertical movement.

The L-shaped main block 12 has a baseplate 35 which is essentially rectangular and vertical and in which there are various bores 36 for attaching, if necessary, an adapter baseplate 14, the top of which compliments the underside of the baseplate 35. The underside of the adapter baseplate 14 is formed in such a way that it can be attached to a corresponding press. This gives the advantage that only the adapter baseplate 14 needs to be changed if there is a change in press. Formed at right angles to the baseplate 35 is the stand 37 of the L-shaped main block 12 in which two guide bores 38 extend over the entire height of the stand 37 and are arranged on the outer edges 70 so that the guide bores 38 are aligned with the posts 8 in the bores 63. The inside diameter of the guide bores 38 is greater than the outside diameter of the guide posts 8. For better guidance and to reduce friction, guide bushings 13 are introduced into the guide bores 38. Thus, the guide posts 8 can move vertically back and forth without problem inside the guide bushings 13. It can be seen, for example, in Figure 8 how the mobile unit made up of the stamping block 6, the guide post 8, the device for adjusting the crimping height 1 and the cam disc 3 which is in its raised position.

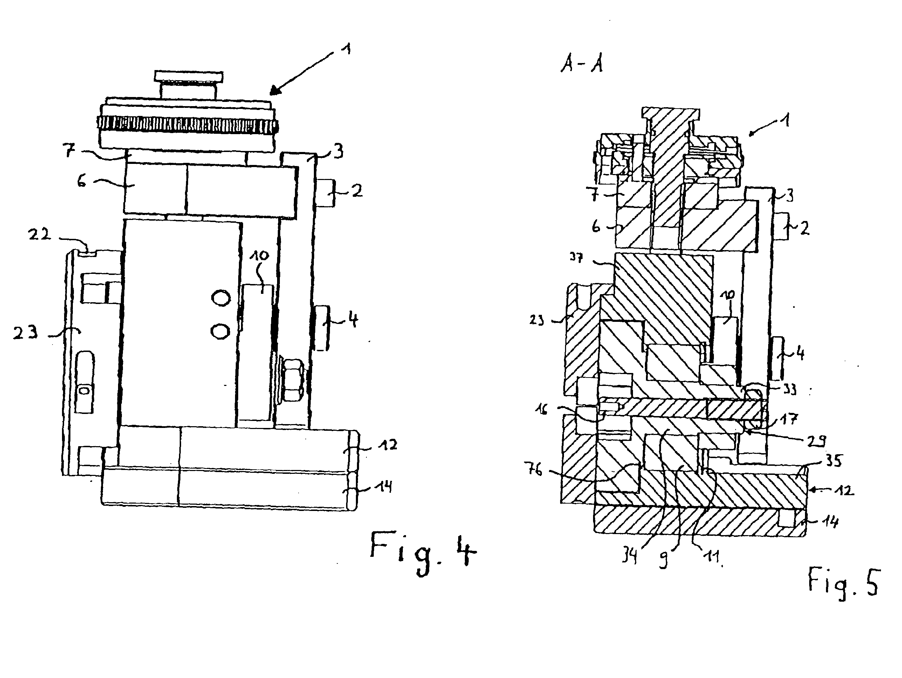

At right angles to and between the guide bores 38 there is an accommodating opening 40 which has symmetry of revolution overall but, as can be seen to the left in Figure 5, whose inside diameter in the left-hand zone 75 is greatest. There then follows a neck-shaped stop 76 against which a main bearing 9 bears. The inside diameter of the middle zone 77 of the accommodating opening 40 is smaller than the left-hand zone 75 and more or less corresponds to the outside diameter of the cylindrical bearing surface of the main bearing 9. At the right-hand end of the accommodating opening 40 there is an annular groove 78 to house a retaining ring 11 for halting the main bearing 9 which is in the middle zone. After the cylindrical bearing surface of the main bearing 9 has been mounted in the middle zone 77 of the accommodating opening 40, the body of the member 19 is then introduced from the rear side of the stand 37. The body of the member 19 is made up of three zones which essentially have symmetry of revolution and on their axis of rotation have a passage opening 41 to accommodate a contact support 16. The outside diameters of the three zones, as shown in Figure 5, narrow gradually in each zone from left to right. On its external circumference parallel to the axis of rotation, the left-hand zone 70 comprises four bearing orifices 42 which are offset by 90° and into which pegs 18 are introduced. It can be seen in Figure 1 that the left-hand zone 70 is flattened on the left over a certain angle. This flattening makes it possible, in automatic operation, for a gripping device to be introduced into the crimping zone 24 which is located between the ends of the crimping members 21. The middle zone 71 of the member body 19 has the role of a shaft 29 and can rotate in the main bearing 9. The right-hand end 72 of the member body 19 protrudes from the front side of the stand 37. There is an orientation slot 73 on this end 72. Slipped onto this end 72 is a crank 10. This crank 10 has, at its end, a first bore 26 into which a bearing bushing 5 is introduced. This bearing bushing 5 takes a needle 4. The other end 28 of the crank 10 has a second bore 101 in which there is a second orientation slot 100. The right-hand end 72 thus enters the second bore 101 of the key 79 and the two are aligned so that the two orientation slots 73 and 74 are in register so that a key 79 can be introduced which key is stopped on the shaft 29 by a retaining ring 15. This key guarantees that the body of the member 19 follows each rotational movement of the crank 10.

As visible in Figure 9, the rectangular cam disc 3 has a guide well 27, the start 31 of which is vertical and the end 32 of which is inclined to the right in a straight line. The needle 4 which is in the crank 10 is introduced into this guide well 27. The oblique end 32 of the guide well 27 converts a translational movement into a rotational movement as the mobile unit already mentioned moves up and down and the rotational movement is transmitted to the crank. Figure 9 also shows that the needle 4 is at the end of the guide well 27. If, on the other hand, the mobile unit is in its uppermost position, the needle 4 drops down into the beginning zone 31 of the guide well 27 as depicted in Figure 8.

As already mentioned previously (see Figure 5), the member body has a passage 41 which is capable of accommodating a support for a contact 16 in the form of a bar which at its right-hand end has an external screw thread and meshes with the internal screw thread of the passage opening 41. The contact support has therefore to be introduced into the passage opening and then screwed in a little at a time until it reaches the correct position. In this position, it is possible to grip supports for contacts 16 with a safety nut 17. The left-hand end of the supports for contacts 16 has, in the direction of axial rotation, a cavity formed to be the complement of the sleeve 82. It is thus possible to fix the sleeve in place by placing it manually.

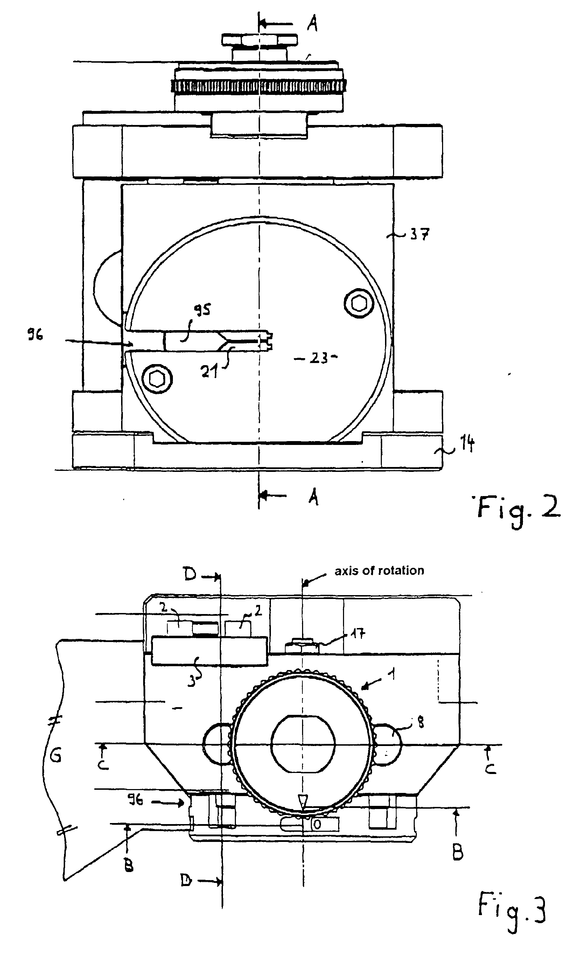

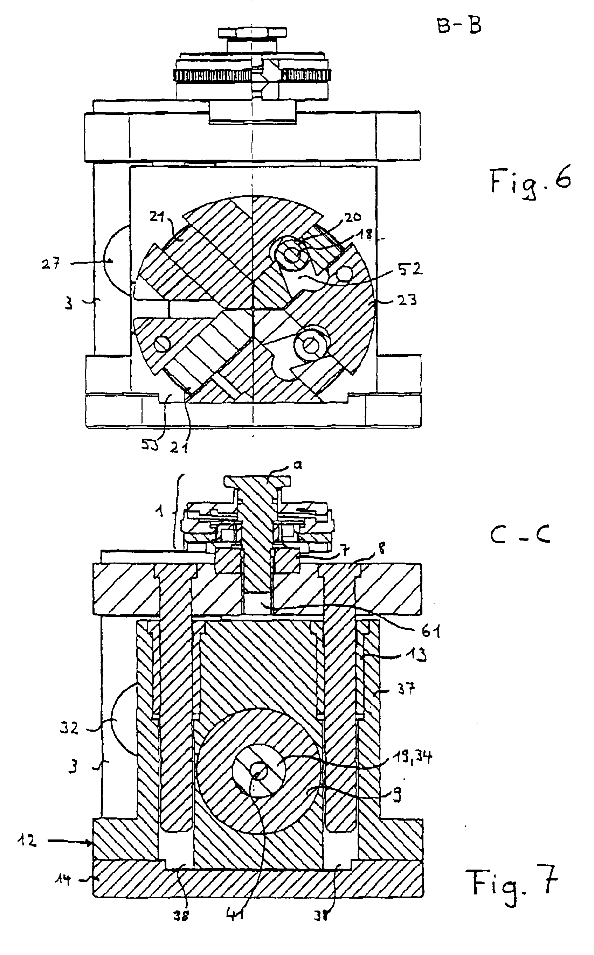

In Figures 1 to 6 as already mentioned before, fitting pegs 18 are introduced into the orifices of the accommodating bores 42. Over these fitting pegs 18 there are bearing sleeves 20 (see Figure 6 on the right-hand side). It is to be noted that section B-B in Figure 3 on the right-hand side is a little deeper than on the left-hand side. The right-hand side of Figure 6 cuts through the crimping members 21 which means that the bearing sleeves 20 behind can be seen. The crimping members 21 are essentially of rectangular shape and have a V-shaped pointed end. Figure 1 depicts them offset by 90°. The guide slots 53 designed for the crimping member are made in the member support, the slots 53 being offset by 90° from one another (see Figure 6). On the same side as the guide slots 53 there are semicircular indentations to take the bearing sleeves 20. These block the rotational movement both in the clockwise direction and in the opposite direction. The surfaces 51 of the crimping members 21 facing towards the member body have sliding slots 52 at a slant with respect to the longitudinal direction. The bearing bushings 20 are in the these sliding slots.

It should also be noted that the rear of the stand 37 has a neck 80 in which fixing bores 81 are made so that the pierced holes align in the member support. Screws are then passed into these holes for fixing the member support 23 onto the rear of the stand 37. On the rear as depicted in Figure 2, it can be seen that a slit 95 has been made in the member support 23 and which extends from the middle to the left. Underneath, there is on the left-hand side of the stand 37 and at the same level, but a little wider, a drilling 96. The drilling 96 and the slit 95 allow the lateral insertion of a terminal 82. This lateral insertion is indispensable, particularly for automatic operation given that, as will be explained later on, a gripping device is slipped into the drilling 96 until the terminal 82 is level with the axis of rotation.

In what follows, we shall now describe how the crimping tool works. The mobile unit made up of the stamping block 6, the guide post 8 and the cam disc 3 is raised and lowered by a press of known type, not shown. In what follows, it is to be assumed that there is a terminal 82 in the cavity of the contact support 16. The press, not shown, brings this mobile unit downwards and the peg which is in the guide well slides now from the beginning zone 31 to the end zone 32 of the guide well. As already mentioned beforehand, the oblique guidance of the terminal zone 32 causes a small rotational movement of the crank 10. It is of the order of about 18°. This crank movement is transmitted to the member body 19 because of the immobilization of the key 79, that is to say that the member body is also turned through 18° in the clockwise direction (Figure 9). This rotational movement changes in Figure 6 to the anticlockwise direction given that the view is from the rear of the crimping tool and the bearing bushings 20 therefore also turn in the anticlockwise direction. The bearing bushing 20 is in the slot 52 of the crimping members 21 which means that the four members move, together and at the same time, towards the middle and deform the sleeve in the same way. According to the adjustment of the device for adjusting the crimping height 1, the crimping members 21 can move towards each other only to a certain extent.

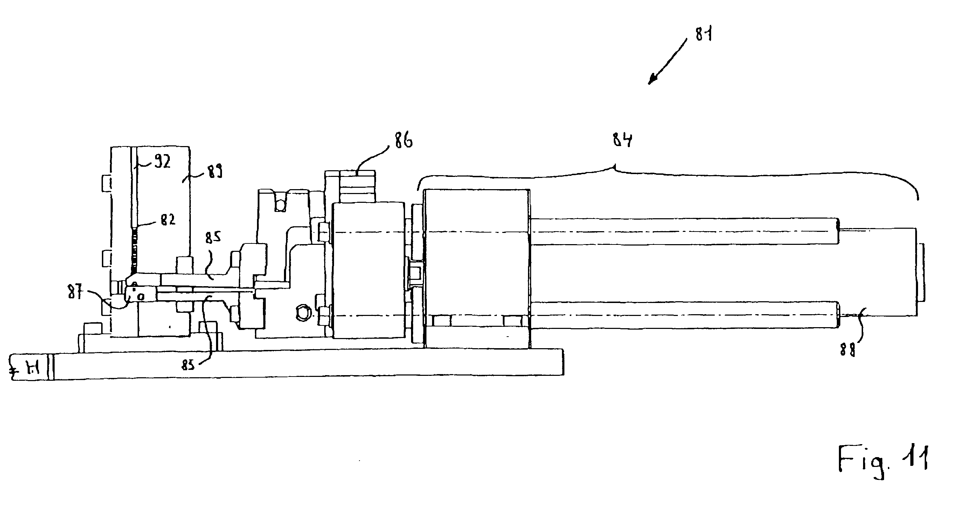

In what follows, we now wish to fill in details about the crimping machine. Figures 10 and 3 show a view from above of the complete crimping machine. Figures 9 and 11 show the complete front face of the crimping machine according to the invention, where the diagram of Figures 10 and 3 has been rotated through 180°, then just stood up. Figures 10 and 11 show a loading device 81 for automatically introducing terminals 82 into the crimping tool 30. The loading device 81 has a storage holder 89 placed vertically for the terminals 82 and comprises a well 90 which is essentially vertical. The storage holder 89 is on the lower right-hand edge of a bottom plate (Figure 10). At right angles to the essentially rectangular storage holder there is a second feed device 91 arranged towards the bottom and capable of slightly moving the lowermost sleeve in the storage holder 89 out of the storage holder.

Fixed to the left-hand side of the bottom plate is the first feed device 84 with a ram 88 which has a lifting stroke of about 160 mm. Fixed to this first feed device 84 is a gripping device 83 with two extensile gripping arms 85; the gripping arms 85 are actuated by a first piston 86 so that the free ends can open and close to grip the terminal 82 pushed out of the storage holder 89 by the second piston 91. After the terminal has been taken out of the holder 89, the gripping device 83 and the first piston 86 is pushed into the drilling 96 using the ram 88 until the terminal 82 comes level with the axis of rotation in the crimping zone 24. The fibre-optic waveguide is then introduced manually into the terminal, the press is actuated; this crimps the fibre-optic waveguide into the terminal when the press presses, it rises back up again and therefore opens the crimping member 21. The terminal 82 with the fibre-optic waveguide can now be withdrawn by the loading device 81 along the drilling 96 and the slit 95. Operation of the first piston 86 opens the arms 85 which thus release the crimped fibre-optic waveguide. It is to be noted that the first feed device has to move parallel to the drilling, that is to say that the gripping arms 85 have to be aligned with the drilling 96.

## Claims

1. Crimping tool, particularly for end terminals of fibre-optic waveguides comprising:
- a main block (12),
- a stamping block (6),
- a device for adjusting the crimping height (1) which is connected to the stamping block, and,
- at least two crimping members (21),
characterized in that the stamping block (6) can be moved vertically with respect to the main block (1) using at least one guide post (8) which slides in the main block (12) while a member body (19) placed so that it can rotate in the main block (12) turns when the stamping block (6) comes down so that the crimping members (21) placed at right angles to the axis of rotation of the member body (19) are brought at the same time into a crimping zone (24) in which a fibre end terminal can be held.

2. Crimping tool according to Claim 1, characterized in that a cam disc (3) is fixed on the side of the stamping block (6), this disc acting on a crank (10) connected to the member body (19).

3. Crimping tool according to Claim 2, characterized in that one of the ends (25) of the crank (10) has a first bore (26) to accommodate a needle (4) which can slide in a guide well (27) arranged in the cam disc and in that the other end (28) of the crank (10) is fixed to the member body (19) in such a way that the member body (19) turns at the same time as the crank (10).

4. Crimping tool according to Claim 3, characterized in that the beginning (31) of the guide well (27) is essentially vertical and in that the end (32) of the guide well (27) is inclined towards the vertical in such a way that the crank (10) is turned when the stamping block (6) moves vertically.

5. Crimping tool according to at least one of Claims 1 to 4, characterized in that the L-shaped main block (12) comprises a baseplate (35) essentially of rectangular shape with bores (36) for attaching it to a press or to an adapter plate (14) and a stand (37) vertical and perpendicular to the baseplate (35) and in which and parallel to the latter is made at least one guide bore (38) to accommodate the guide post (8) and in which is made a continuous accommodating opening (40) with symmetry of revolution and perpendicular to the guide bores (38), for housing the member body (19).

6. Crimping tool according to at least one of Claims 1 to 5, characterized in that the member body (19), made in a single piece which essentially has symmetry of revolution, has a shaft (29) with a smaller diameter in the end zone (33) and a medium-sized diameter in the middle zone (34) on which is placed a washer (39) with a larger diameter which has bearing orifices (42) parallel to the axis of rotation and offset by 90° on the circumference to accommodate pegs (18) and comprises, along the axis of rotation, a passage opening (41) to accommodate a support for a terminal (16) for manual operation.

7. Crimping tool according to at least one of Claims 1 to 6, characterized in that the rectangular crimping members (21), each having a V-shaped pointed end (50), are housed in an essentially disc-shaped member support (23) fixed to the main block (12).

8. Crimping tool according to at least one of Claims 1 to 7, characterized in that the surfaces (51) of the crimping members (21) facing towards the body of the main block (12) have slots (52) running obliquely with respect to the horizontal direction and in that the member support (23) has four guide slots (53) offset by 90° to house four crimping members so that the terminals (20) in the slots (52) act, when the crank (10) turns, in such a way on the oblique surfaces of the slots (52) that the crimping members (21) are moved together or further apart, together.

9. Crimping tool according to at least one of Claims 1 to 8, characterized in that the stand (37) has laterally, in the accommodating opening (40), a hole (60) and in that the support of this member (23) has, level with the hole (96) a slit (95) so that a gripping device can be introduced into the crimping zone (24), particularly for fibre end terminals.

10. Crimping machine comprising a crimping tool (30) according to at least one of Claims 1 to 9 and a loading device (81) for automatically introducing terminals (82) into the crimping tool (30) where the loading device (81) has a gripping device (83) for holding the terminals (82) and a first feed device (84) for pushing the gripping device (83) with a gripped terminal into the crimping zone (24) of the body of the member (19) of the crimping tool (30).

11. Crimping machine according to Claim 10, characterized in that the gripping device (83) has two arms (85) which can be inclined towards each other, it being possible for at least one arm to be oriented towards the other by a first piston (86) such that the free ends (87) of the arms (85) can hold a terminal (82).

12. Crimping machine according to at least one of Claims 10 to 11, characterized in that the first feed device (84) has a ram with a stroke of as much as 160 mm.

13. Crimping machine according to at least one of Claims 10 to 12, characterized in that it comprises a vertical holder (89) for storing the terminals (82) which are stored one upon the next separately in an essentially vertical well (90), the storage holder having a second piston (91) which conveys the terminals (82) one after another towards the free ends (87) of the arms (85).

14. Crimping machine according to at least one of Claims 10 to 13, characterized in that the arms (85) run essentially parallel to the direction of pushing of the feed device (84) and are aligned with the crimping zone (24) and with the hole (60).
